# EUROPEAN PATENT APPLICATION

(11) **EP 4 549 386 A1**
(43) Date of publication of application: **07.05.2025**
(21) Application number: 24841670.3
(22) Date of filing: 05.08.2024
(51) Int. Cl.: C01D 1/04, B01J 3/00, C08J 11/14, C08J 11/16, C23F 11/06, C23F 15/00, G01N 27/26, G01N 27/48

(54) **BASIC SUBCRITICAL WATER COMPOSITION, WATER-CONTAINING COMPOSITION, DEVICE, AND CONTAINER**

(30) Priority: 01.09.2023 JP 2023142294; 04.06.2024 JP 2024090583
(71) Applicant: Daikin Industries, Ltd., Osaka-shi, Osaka 530-0001 (JP)
(72) Inventor: NAKAUE, Ayane, Osaka 5300001 (JP); MUKAE, Hirofumi, Osaka 5300001 (JP); KISHIKAWA, Yosuke, Osaka 5300001 (JP)
(74) Representative: Hoffmann Eitle
(86) International application number: PCT/JP2024/027950
(87) International publication number: WO 2025/047316

(57) **Abstract**

The disclosure aims to provide a basic subcritical water composition and a water-containing composition each capable of decomposing, for example, polymers while preventing or reducing corrosion of the reaction device, and a device and a container therefor. The disclosure relates to a basic subcritical water composition having a pH of 13.7 or lower and a potential of 400 mV or higher at a current density exceeding 10 mA/cm² in an anodic polarization curve obtained using a steel material as a working electrode.

## Description

### TECHNICAL FIELD

The disclosure relates to basic subcritical water compositions, water-containing compositions, devices, and containers.

### BACKGROUND ART

Nowadays, as the need for environmental conservation and the establishment of a resource-recycling society is being discussed, various studies are being made on the recycling of organic materials such as plastics. In such recycling, a decomposition technique using subcritical water is applied. For example, Patent Literature 1 and Non-Patent Literature 1 each disclose a method for decomposing fluorine-containing polymers in subcritical water containing a basic compound such as potassium hydroxide.

### CITATION LIST

### - Patent Literature

Patent Literature 1: JP 2021-155478 A

### - Non-Patent Literature

Non-Patent Literature 1: Jin Hamaura et al., Eur. Polym. J. 182 (2023), 111724

### SUMMARY OF INVENTION

### - Technical Problem

The disclosure aims to provide a basic subcritical water composition and a water-containing composition each capable of decomposing, for example, polymers while preventing or reducing corrosion of the reaction device, and a device and a container therefor.

### - Solution to Problem

The disclosure (1) relates to a basic subcritical water composition having a pH of 13.7 or lower and a potential of 400 mV or higher at a current density exceeding 10 mA/cm² in an anodic polarization curve obtained using a steel material as a working electrode.

The disclosure (2) relates to the basic subcritical water composition according to the disclosure (1) having a temperature of 180°C or higher and lower than 250°C.

The disclosure (3) relates to the basic subcritical water composition according to the disclosure (1) or (2), wherein the steel material contains 8% by mass or more of Ni.

The disclosure (4) relates to the basic subcritical water composition according to any one of the disclosures (1) to (3), wherein the basic subcritical water composition has a pH of 13 or higher and 13.5 or lower and a temperature of 200°C or higher and 235°C or lower, and the steel material contains 15% by mass or more of Ni and 10% by mass or more of Cr.

The disclosure (5) relates to a water-containing composition having a temperature of 180°C or higher and lower than 250°C and a potential of 400 mV or higher and 900 mV or lower at a current density exceeding 10 mA/cm² in an anodic polarization curve obtained using a steel material as a working electrode.

The disclosure (6) relates to the water-containing composition according to the disclosure (5), wherein the steel material contains 8% by mass or more of Ni.

The disclosure (7) relates to the water-containing composition according to the disclosure (5) or (6) having a pH of 10 or higher and 13.7 or lower.

The disclosure (8) relates to the water-containing composition according to any one of the disclosures (5) to (7), wherein the water-containing composition has a pH of 13 or higher and 13.5 or lower and a temperature of 200°C or higher and 235°C or lower, and the steel material contains 15% by mass or more of Ni and 10% by mass or more of Cr.

The disclosure (9) relates to a device including the basic subcritical water composition according to any one of the disclosures (1) to (4) or the water-containing composition according to any one of the disclosures (5) to (8) .

The disclosure (10) relates to a container including the basic subcritical water composition according to any one of the disclosures (1) to (4) or the water-containing composition according to any one of the disclosures (5) to (8).

### - Advantageous Effects of Invention

The disclosure can provide a basic subcritical water composition and a water-containing composition each capable of decomposing, for example, polymers while preventing or reducing corrosion of the reaction device, and a device and a container therefor.

### DESCRIPTION OF EMBODIMENTS

The disclosure will be specifically described below.

The disclosure relates to a basic subcritical water composition having a pH of 13.7 or lower and a potential of 400 mV or higher at a current density exceeding 10 mA/cm² in an anodic polarization curve obtained using a steel material as a working electrode. The basic subcritical water composition of the disclosure, with the aforementioned configuration, can be used for subcritical water treatment of various objects while preventing or reducing corrosion of the reaction device. It can decompose, for example, polymers.

The basic subcritical water composition of the disclosure contains subcritical water. Subcritical water refers to water that remains liquid under pressurization in a temperature range exceeding 100°C and below the critical temperature of 374°C. Subcritical water has physical properties different from those of water at 100°C or lower. In particular, subcritical water at 200°C to 300°C has a significantly decreased relative permittivity, exhibiting lipid solubility nearly equivalent to that of methanol or acetone at room temperature. Also, the magnitude of its ionic product increases to the order of 10⁻¹¹ mol/L (10⁻¹⁴ mol/L at room temperature), resulting in hydrogen and hydroxide ion concentrations 30 times higher than those of room-temperature water. Subcritical water particularly at 200°C to 300°C is therefore known to exhibit reactivity different from that of room-temperature water. The temperature of the basic subcritical water composition of the disclosure is preferably lower than 250°C, more preferably 245°C or lower, still more preferably 240°C or lower, further preferably 235°C or lower, while preferably 180°C or higher, more preferably 200°C or higher, still more preferably 205°C or higher, further preferably 210°C or higher, particularly preferably 215°C or higher, more particularly preferably 220°C or higher, even more preferably 225°C or higher.

Any water may be used for preparation of subcritical water, such as tap water, ion-exchanged water, distilled water, or well water. In order to prevent or reduce side reactions caused by, for example, coexistent salts, preferred is ion-exchanged water or distilled water. The amount of water used should be enough to submerge the object to be treated. However, the amount must be carefully determined, because if the amount of water introduced into a sealed container for pressurization is extremely small, the water will all turn into steam after heating and will not become subcritical water.

The basic subcritical water composition of the disclosure preferably contains at least one basic compound selected from the group consisting of alkali metal hydroxides and alkaline earth metal hydroxides.

Examples of alkali metal hydroxides include lithium hydroxide, sodium hydroxide, potassium hydroxide, and cesium hydroxide. Sodium hydroxide and/or potassium hydroxide is/are preferred among these. Here, potassium hydroxide is known to have higher activity and basicity than sodium hydroxide in concentrated solutions. From this standpoint, potassium hydroxide is preferred the most.

Examples of alkaline earth metal hydroxides include calcium hydroxide and barium hydroxide.

The concentration of a basic compound in the basic subcritical water composition is preferably 0.5 M or lower, more preferably 0.45 M or lower, still more preferably 0.40 M or lower, further preferably 0.35 M or lower, while preferably 0.01 M or higher, more preferably 0.05 M or higher, still more preferably 0.10 M or higher, further preferably 0.15 M or higher. As is well known to those skilled in the art, the unit "M" means mol/L.

The basic subcritical water composition of the disclosure has a potential of 400 mV or higher at a current density exceeding 10 mA/cm² in an anodic polarization curve obtained using a steel material as a working electrode. In the anodic polarization curve obtained using a steel material as a working electrode, the potential at a current density exceeding 10 mA/cm² is preferably 450 mV or higher, more preferably 500 mV or higher, still more preferably 550 mV or higher, while preferably 900 mV or lower.

The anodic polarization curve is determined using a potentiostat at a potential sweep rate of 20 mV/min in conformity with JIS G0577.

The steel material preferably contains at least one selected from the group consisting of Ni, Cr, and Fe.

The steel material preferably contains Ni in an amount of preferably 8% by mass or more, more preferably 15% by mass or more, still more preferably 70% by mass or more. The upper limit of the amount is not limited and is normally 90% by mass.

The steel material preferably contains Cr in an amount of preferably 10% by mass or more, more preferably 20% by mass or more, while preferably 40% by mass or less, more preferably 30% by mass or less.

The steel material contains Fe in an amount of preferably 5% by mass or more, more preferably 20% by mass or more, still more preferably 40% by mass or more, while preferably 80% by mass or less, more preferably 60% by mass or less, still more preferably 50% by mass or less.

The steel material may be, for example, SUS310S, SUS304L, or NCF600.

The basic subcritical water composition of the disclosure has a pH of 13.7 or lower. The pH of the basic subcritical water composition is preferably 10 or higher, more preferably 11 or higher, still more preferably 12 or higher, further preferably 13 or higher, while preferably 13.6 or lower, more preferably 13.5 or lower.

The disclosure also relates to a water-containing composition having a temperature of 180°C or higher and lower than 250°C and a potential of 400 mV or higher and 900 mV or lower at a current density exceeding 10 mA/cm² in an anodic polarization curve obtained using a steel material as a working electrode. The water-containing composition of the disclosure, with the aforementioned configuration, can be used for treatment of various objects while preventing or reducing corrosion of the reaction device. It can decompose, for example, polymers.

The temperature of the water-containing composition of the disclosure is lower than 250°C, preferably 245°C or lower, more preferably 240°C or lower, still more preferably 235°C or lower, while it is 180°C or higher, preferably 200°C or higher, more preferably 205°C or higher, still more preferably 210°C or higher, further preferably 215°C or higher, particularly preferably 220°C or higher, even more preferably 225°C or higher.

The water-containing composition of the disclosure has a potential of 400 mV or higher and 900 mV or lower at a current density exceeding 10 mA/cm² in an anodic polarization curve obtained using a steel material as a working electrode. In the anodic polarization curve obtained using a steel material as a working electrode, the potential at a current density exceeding 10 mA/cm² is preferably 450 mV or higher, more preferably 500 mV or higher, still more preferably 550 mV or higher.

For the water-containing composition of the disclosure, examples of the steel material include those exemplified for the basic subcritical water composition of the disclosure.

The water-containing composition of the disclosure preferably contains subcritical water.

The water-containing composition of the disclosure preferably contains at least one basic compound selected from the group consisting of alkali metal hydroxides and alkaline earth metal hydroxides. Examples of the alkali metal hydroxides and the alkaline earth metal hydroxides include those exemplified for the basic subcritical water composition of the disclosure.

The concentration of the basic compound in the water-containing composition of the disclosure can be set to be within the same range as that described above for the basic subcritical water composition of the disclosure.

The pH of the water-containing composition of the disclosure is preferably 10 or higher, more preferably 11 or higher, still more preferably 12 or higher, further preferably 13 or higher, while preferably 13.7 or lower, more preferably 13.6 or lower, still more preferably 13.5 or lower.

The basic subcritical water composition and the water-containing composition of the disclosure are preferably used in contact with the aforementioned steel material. For example, they are preferably used in contact with a container made of the aforementioned steel material. Also, they are preferably used for treatment (preferably subcritical water treatment) of objects in a container made of the aforementioned steel material. The basic subcritical water composition and the water-containing composition of the disclosure are less likely to cause corrosion of the aforementioned steel material when in contact with the steel material.

The basic subcritical water composition and the water-containing composition of the disclosure can be used for treatment, preferably subcritical water treatment, of various objects and are suitable for decomposition of, for example, polymers.

Examples of polymers include polyolefin resins such as polyethylene and polypropylene; polyamide (PA) resins such as Nylon 6, Nylon 11, Nylon 12, Nylon 46, Nylon 66, Nylon 610, Nylon 612, and Nylon MXD6; polyester resins such as polyethylene terephthalate (PET), polybutylene terephthalate (PBT), polyarylate, aromatic polyesters (including liquid crystal polyester), and polycarbonate (PC); polyacetal (POM) resins; polyether resins such as polyphenylene oxide (PPO), modified polyphenylene ethers, and polyether ether ketone (PEEK); polysulfone-based resins such as polysulfone (PSF) and polyether sulfone (PES); vinyl polymers such as ABS resin and poly-4-methylpentene-1 (TPX resin); polyphenylene sulfide (PPS); polyketone sulfide; polyether imide; and polyimides (PI). The examples also include fluororesins such as ethylene (ET)/TFE copolymers (ETFE), polyvinyl fluoride (PVF), and polyvinylidene fluoride (PVdF). The Nylon MXD6 is a crystalline polycondensate obtainable from meta-xylenediamine (MXD) and adipic acid. In particular, polycondensation resins such as polyester resins and epoxy resins are preferred for easy depolymerization. More preferred are polyester resins.

The polymers may include oligomers constituting polymers and oligomers to which a functional group is added.

Use of the basic subcritical water composition and the water-containing composition of the disclosure can facilitate decomposition of, for example, the polymers.

Next, a description is given on a method for decomposing a polymer by reacting the polymer in the basic subcritical water composition or the water-containing composition of the disclosure. For example, a pressure container having a size appropriate for the amount of a polymer to be treated is charged with water, the polymer to be treated, and optionally a basic compound, and then pressurized and sealed. For pressurization of the inside of the pressure container, gas may be injected into the pressure container. Examples of such gas include air, argon, and nitrogen. A non-limiting example of the degree of pressurization is about 0.5 MPa.

The pressure container that has undergone the above process is heated, thereby initiating a decomposition reaction. The basic subcritical water composition and the water-containing composition of the disclosure may be generated in the pressure container during the decomposition reaction. The heating temperature is lower than 250°C, preferably 245°C or lower, more preferably 240°C or lower, still more preferably 235°C or lower, while it is 180°C or higher, preferably 200°C or higher, more preferably 205°C or higher, still more preferably 210°C or higher, further preferably 215°C or higher, particularly preferably 220°C or higher, even more preferably 225°C or higher. In the case where the pressure container itself has a heating means, the pressure container may be heated with that heating means. In the case where the pressure container does not have a heating means, the pressure container as a whole may be heated in an autoclave or in an oven. The reaction time is, for example, about 1 minute to 100 hours. It may be 1 to 100 hours, and is preferably 1 minute to 1 hour, more preferably 1 to 30 minutes. The reaction pressure is, for example, about 0.1 to 22 MPa.

The aqueous solution after the decomposition reaction contains monomers and hydrocarbon compounds that have constituted the polymer. The decomposition method may include, after the decomposition step, a recovery step of recovering monomers and hydrocarbon compounds generated. The decomposition method, including the recovery step, enables effective utilization of resources.

The decomposition method preferably includes, prior to the decomposition step, a pulverization step of pulverizing the polymer to pulverized particles with a maximum linear length of 3 mm or shorter. In the decomposition method including the pulverization step, decomposition of the polymer is facilitated.

Any pulverization method may be applied, such as cryo-milling, a method using a disk mill, a hammer mill, a millstone pulverizer, or a jet mill.

The pulverization temperature is preferably -200°C or higher and 90°C or lower. The pulverization temperature is more preferably 40°C or lower, still more preferably 0°C or lower.

The maximum linear length of the pulverized particles of the polymer is preferably 3 mm or shorter, more preferably 2 mm or shorter, still more preferably 1 mm or shorter, even more preferably 500 µm or shorter. The maximum linear length is preferably 10 um or longer, more preferably 30 µm or longer, still more preferably 100 µm or longer. With the average particle size of the pulverized particles of the polymer within the above range, decomposition of the polymer is further facilitated.

For determination of the maximum linear length, 100 or more secondary particles in a SEM image were observed and the lengths of the respective secondary particles were measured. The largest length among these was defined as the maximum linear length.

The disclosure also relates to a device including the aforementioned basic subcritical water composition or the aforementioned water-containing composition.

Since the basic subcritical water composition and the water-containing composition of the disclosure can be used for treatment, preferably subcritical water treatment, of various objects while preventing or reducing corrosion of the reaction device, the device of the disclosure is suitable as a device used for subcritical water treatment. Moreover, since the basic subcritical water composition and the water-containing composition of the disclosure can decompose, for example, polymers while preventing or reducing corrosion of the reaction device, the device of the disclosure is suitable as a device used for decomposition of, for example, polymers.

The part of the device of the disclosure, where the basic subcritical water composition and the water-containing composition contact, is preferably made of the aforementioned steel material. The device of the disclosure also preferably includes the below-described container of the disclosure.

The disclosure also relates to a container including the aforementioned basic subcritical water composition or the aforementioned water-containing composition.

Since the basic subcritical water composition and the water-containing composition of the disclosure can be used for treatment, preferably subcritical water treatment, of various objects while preventing or reducing corrosion of the reaction device, the container of the disclosure is suitable as a container used for subcritical water treatment. Moreover, since the basic subcritical water composition and the water-containing composition of the disclosure can decompose, for example, polymers while preventing or reducing corrosion of the reaction device, the container of the disclosure is suitable as a container used for decomposition of, for example, polymers.

The container of the disclosure is preferably made of the aforementioned steel material.

It should be appreciated that a variety of modifications and changes in the structure and other details may be made to the aforementioned embodiments without departing from the spirit and scope of the claims.

### EXAMPLES

The disclosure is described with reference to examples, but the disclosure is not intended to be limited by these examples.

The parameters in the examples were determined by the following methods.

### (1) Measurement of corrosion initiation potential

An anodic polarization curve was determined in conformity with JIS G0577. In the potentiodynamic method using a potentiostat at a potential sweep rate of 20 mV/min from the natural potential, the corrosion initiation potential was defined as the potential at which the current density reached 10 mA/cm².

### (Example 1)

NCF600 (Ni: 72.00% by mass or more, Cr: 14.00 to 17.00% by mass, Fe: 6.00 to 10.00% by mass) was used as a working electrode. A container was charged with an aqueous potassium hydroxide solution prepared to have a pH of 13.5, and pressurized with argon gas to 0.8 MPa, followed by a temperature increase to 230°C. A potentiostat was used to boost the voltage at a potential sweep rate of 20 mV/min, and the potential at which the current density exceeded 10 mA/cm² was determined. The result is shown in Table 1.

### (Example 2)

NCF600 was used as a working electrode. A container was charged with an aqueous potassium hydroxide solution prepared to have a pH of 13, and pressurized with argon gas to 0.8 MPa, followed by a temperature increase to 230°C. A potentiostat was used to boost the voltage at a potential sweep rate of 20 mV/min, and the potential at which the current density exceeded 10 mA/cm² was determined. The result is shown in Table 1.

### (Example 3)

SUS310S (Ni: 19.00 to 22.00% by mass, Cr: 24.00 to 26.00% by mass) was used as a working electrode. A container was charged with an aqueous potassium hydroxide solution prepared to have a pH of 13, and pressurized with argon gas to 0.8 MPa, followed by a temperature increase to 200°C. A potentiostat was used to boost the voltage at a potential sweep rate of 20 mV/min, and the potential at which the current density exceeded 10 mA/cm² was determined. The result is shown in Table 1.

### (Example 4)

SUS310S was used as a working electrode. A container was charged with an aqueous potassium hydroxide solution prepared to have a pH of 13.3, and pressurized with argon gas to 0.8 MPa, followed by a temperature increase to 200°C. A potentiostat was used to boost the voltage at a potential sweep rate of 20 mV/min, and the potential at which the current density exceeded 10 mA/cm² was determined. The result is shown in Table 1.

### (Example 5)

SUS310S was used as a working electrode. A container was charged with an aqueous potassium hydroxide solution prepared to have a pH of 13, and pressurized with argon gas to 0.8 MPa, followed by a temperature increase to 230°C. A potentiostat was used to boost the voltage at a potential sweep rate of 20 mV/min, and the potential at which the current density exceeded 10 mA/cm² was determined. The result is shown in Table 1.

### (Comparative Example 1)

NCF600 was used as a working electrode. A container was charged with an aqueous potassium hydroxide solution prepared to have a pH of 14, and pressurized with argon gas to 0.8 MPa, followed by a temperature increase to 230°C. A potentiostat was used to boost the voltage at a potential sweep rate of 20 mV/min, and the potential at which the current density exceeded 10 mA/cm² was determined. The result is shown in Table 1.

### (Comparative Example 2)

NCF600 was used as a working electrode. A container was charged with an aqueous potassium hydroxide solution prepared to have a pH of 14, and pressurized with argon gas to 0.8 MPa, followed by a temperature increase to 250°C. A potentiostat was used to boost the voltage at a potential sweep rate of 20 mV/min, and the potential at which the current density exceeded 10 mA/cm² was determined. The result is shown in Table 1.

### (Comparative Example 3)

NCF600 was used as a working electrode. A container was charged with pure water and pressurized with argon gas to 0.8 MPa, followed by a temperature increase to 200°C. A potentiostat was used to boost the voltage at a potential sweep rate of 20 mV/min, and the potential at which the current density exceeded 10 mA/cm² was determined. The result is shown in Table 1.

**[Table 1]**

| | | Example 1 | Example 2 | Example 3 | Example 4 | Example 5 | Comparative Example 1 | Comparative Example 2 | Comparative Example 3 |
|---|---|---|---|---|---|---|---|---|---|
| Solvent | | KOH (pH 13.5) | KOH (pH 13) | KOH (pH 13) | KOH (pH 13.3) | KOH (pH 13) | KOH (pH 14) | KOH (pH 14) | Pure water |
| Temperature | °C | 230 | 230 | 200 | 200 | 230 | 230 | 250 | 200 |
| Steel material | | NCF600 | NCF600 | SUS310S | SUS310S | SUS310S | NCF600 | NCF600 | NCF600 |
| Corrosion initiation potential | mV | 407 | 864 | 580 | 490 | 575 | 324 | 330 | < 900 |

### (Example 6)

An inner cylinder charged with 100 mg of a PET film ("Lumirror film" available from Toray Industries, Inc.) and 20 ml of an aqueous potassium hydroxide solution prepared to have a pH of 13.5 was placed into a pressure container and the pressure container was closed. Then, the atomsphere inside the pressure container was replaced with nitrogen, and the pressure conatiner was placed in an electric furnace, followed by a temperature increase to 230°C. When the temperature inside the pressure container reached 230°C, the reaction was allowed to occur for one minute. The pressure during the reaction was set to 2.8 MPa. After the reaction was finished, the electric furnace was stopped, and the pressure container was taken out of the electric furnace and air-cooled. The residual film after the treatment was collected, washed with pure water, and dried. The resulting film was weighed to calculate the residual amount. The result is shown in Table 2.

The composition of Example 6 has the same pH, the same temperature, and the same composition as those of the composition of Example 1. Accordingly, their corrosion initiation potentials are the same.

### (Examples 7 to 9, Comparative Example 4)

The reaction was allowed to occur and the amount of residual film was calculated as in Example 6, except that the aqueous potassium hydroxide solution prepared to have a pH of 13.5 in Example 6 was replaced with an aqueous potassium hydroxide solution prepared to have a pH shown in Table 2 or pure water and that the reaction temperature, the reaction pressure, and the reaction time were changed as shown in Table 2. The results are shown in Table 2.

The composition of Example 7, the composition of Example 8, and the composition of Example 9 respectively have the same pH, the same temperature, the same composition, and thus the same corrosion initiation potential, as the composition of Example 2, the composition of Example 3, and the composition of Example 4.

**[Table 2]**

| | | Example 6 | Example 7 | Example 8 | Example 9 | Comparative Example 4 |
|---|---|---|---|---|---|---|
| Solvent | | KOH (pH 13.5) | KOH (pH 13) | KOH (pH 13) | KOH (pH 13.3) | Pure water |
| Temperature | °C | 230 | 230 | 200 | 200 | 200 |
| Pressure | MPa | 2.8 | 2.8 | 1.6 | 1.6 | 1.6 |
| Atmosphere | | N₂ | N₂ | N₂ | N₂ | N₂ |
| Reaction time | min | 1 | 10 | 30 | 5 | 30 |
| Film | | PET | PET | PET | PET | PET |
| Residual amount of film | % | 0 | 0 | 0 | 0 | 97 |

## Claims

1. A basic subcritical water composition having
a pH of 13.7 or lower and
a potential of 400 mV or higher at a current density exceeding 10 mA/cm² in an anodic polarization curve obtained using a steel material as a working electrode.

2. The basic subcritical water composition according to claim 1 having a temperature of 180°C or higher and lower than 250°C.

3. The basic subcritical water composition according to claim 1 or 2,
wherein the steel material contains 8% by mass or more of Ni.

4. The basic subcritical water composition according to any one of claims 1 to 3,
wherein the basic subcritical water composition has a pH of 13 or higher and 13.5 or lower and a temperature of 200°C or higher and 235°C or lower, and
the steel material contains 15% by mass or more of Ni and 10% by mass or more of Cr.

5. A water-containing composition having a temperature of 180°C or higher and lower than 250°C and a potential of 400 mV or higher and 900 mV or lower at a current density exceeding 10 mA/cm² in an anodic polarization curve obtained using a steel material as a working electrode.

6. The water-containing composition according to claim 5,
wherein the steel material contains 8% by mass or more of Ni.

7. The water-containing composition according to claim 5 or 6 having a pH of 10 or higher and 13.7 or lower.

8. The water-containing composition according to any one of claims 5 to 7,
wherein the water-containing composition has a pH of 13 or higher and 13.5 or lower and a temperature of 200°C or higher and 235°C or lower, and
the steel material contains 15% by mass or more of Ni and 10% by mass or more of Cr.

9. A device comprising the basic subcritical water composition according to any one of claims 1 to 4 or the water-containing composition according to any one of claims 5 to 8.

10. A container comprising the basic subcritical water composition according to any one of claims 1 to 4 or the water-containing composition according to any one of claims 5 to 8.
